# EUROPEAN PATENT SPECIFICATION

(11) **EP 1 382 414 B1**
(45) Date of publication and mention of the grant of the patent: **04.04.2012**
(21) Application number: 02766701.3
(22) Date of filing: 23.04.2002
(51) Int. Cl.: B23P 5/00, B21K 5/12, B21K 11/02, B21J 5/00, B21D 53/60

(54) **METHOD OF MAKING A CUTTING TOOL BLADE**
VERFAHREN ZUR HERSTELLUNG EINER KLINGE EINES SCHNEIDWERKZEUGS
PROCEDE DE FABRICATION DE LA LAME D'UN OUTIL DE COUPE

(30) Priority: 27.04.2001 RU 2001111410; 05.06.2001 DE 10127546
(43) Date of publication of application: 21.01.2004
(73) Proprietor: Kan-Tech GmbH, 10623 Berlin (DE)
(72) Inventor: Boguslavsky, Boris Zelmanovich, Kazan, 420088 (RU)
(74) Representative: Jungblut, Bernhard Jakob
(86) International application number: PCT/RU2002/000185
(87) International publication number: WO 2002/087818

(56) References cited:
- SU-A1- 1 673 358
- SU-A1- 1 827 904
- US-A- 3 616 712
- US-A- 5 129 289
- US-A- 5 251 514

## Description

### Field of the Invention

This invention relates to machine-building, more particularly to treatment of metals by ultrasonic forging and may be utilized for making blades possessing improved technical and operating characteristics as well as for forming cutting edges of small thickness.

### Background of the Invention

A method of grinding is typically used for making cutting edges of small thickness, e.g., razors (SU, A, 318205).

A method of grinding is limited in the following: insufficient quality of the blade surface, which is caused by the presence of big metal grains in the area of the cutting edge; complex and labor-consuming successive grinding operations combined with the necessity of using precision equipment and special tools in the process of grinding; necessity to use a hardening step prior to forming the blade cutting edge, which makes the treatment more complex; and, moreover, a blade made by grinding is subject to corrosion in storage, which is due to the fact that in the process of forming the cutting edge by grinding very high local temperatures develop which act on the metal after hardening it similarly to tempering, which results in lowering the corrosion strength and durability of the blade.

Methods employing ultrasonic forging for forming the blade cutting edge enable to produce cutting edges of higher quality due to the fact that small grains of metal flow directly to the area of the cutting edge. But, in most cases, known methods, for the purpose of forming the blade cutting edge of high quality, require multiple passes of the plate between the hammers of an ultrasonic device, typically from three to ten passes, as well as those methods, for the purpose of forming the high-quality surface, require additional finishing operations, e.g., electrical and chemical sharpening in an electrolytic solution (RU, A, 2025189).

The necessity of conducting finishing operations for obtaining high-quality blades after ultrasonic treatment of the plate tip is conditioned by the fact that the metal in the tip portion of the cutting edge, when treated by ultrasound, is subject to flowing in various directions, therefore in the tip portion of the cutting edge a burr is formed, rather than by the processes of tempering the metal as in grinding.

In order to remove surface layers of metal additional improvements should be made, e.g., the hammer axes are to be inclined to each other, thus forming a gap enabling the outer layers of metal to flow out (SU, A, 182790, which forms the basis for the preamble of claim 1).

Known in the art is a method of making a cutting tool blade, which includes forming a plate and deforming the plate end, as located between the conical surfaces of the hammers, by ultrasonic forging with the simultaneous movement of the plate relative to the hammer axes in the transverse direction for the purpose of forming the tapered blade at the plate (SU, A, 1720779).

Also known in the art is the blank for making tapered blades by ultrasonic forging, which is made of a plate (SU, A, 1720779).

Such a plate may be made rectangular, e.g., for making razors, or with the curved surface located between the narrow ends of the plate and corresponding to a set surface, e.g., for making scalpels.

In the known method the process of deforming the plate includes its movement in the transverse direction relative to the static supporting force and the gap dimension between the hammers for the whole cycle of deforming is maintained equal to the double amplitude of the ultrasonic oscillations.

The advantage of the method is the possibility of producing objects with the cutting edge having thickness of 1 to 3 microns without a burr or with a minimum burr.

The disadvantages of the method are: the complexity of the ultrasonic forging process due to the necessity of selecting the size of the static end intensifier while taking into account variations in the plate dimensions and due to deviations of the true trajectory of the plate movement from the trajectory set in the mechanism for moving the blank; the complexity of maintaining the set gap between the hammers during the whole cycle of deforming; the necessity to use several transverse passes of the plate between the hammers in order to obtain minimum thicknesses of the cutting edge.

But the main disadvantage of the method, which seemingly enables to obtain high-quality cutting edges having small metal grains and minimum thicknesses, as the studies have shown, is the development of a hidden defect located in the symmetry plane of the cutting edge.

This small defect may be identified with a microscope at a microsection in the tip portion of the cutting edge as a narrow slit-like microvoid located in the cutting edge plane and quasi-dividing the tip of the cutting edge into two symmetrical halves. The formation of the defect is conditioned by different flow rate of the metal layers in ultrasonic forging across the thickness of the blank. In the area where the plate abuts on the conical surface of the hammers the metal, when it is subject to ultrasonic oscillations, the metal How is more intensive than in the middle layers. The upper layers of the metal and small grains, while moving toward the area of the cutting edge tip at the plate movement in the transverse direction relative to the hammer axes, form a narrow slit along the longitudinal symmetry plane of the plate. After the plate moves from the conical surfaces of the hammers the metal layers close, thus enabling to form a very narrow cutting edge. But the inner defect drastically impairs the quality of the cutting edge, first of all its durability. The closed metal layers in the tip of the cutting edge are to be removed by finishing, which results in big increase of the thickness of the cutting edge up to those exceeding 8 microns. It is practically impossible to remove the slit-like microvoid without finishing.

Moreover, the process may not be automated due to different utilized materials, differences in the plate thicknesses, and differences in the plate thickness within the tolerance. The known method does not ensure stable quality of the produced objects.

The document US 3,616,712 discloses a blank for making a tapered blade with a rounded end.

### Summary of the Invention

The basis of this invention is set as the objective of creating a method of making a cutting tool blade and a blank for producing a tapered blade by ultrasonic forging, wherein the blank has been made so as to improve the quality of the cutting edge while ensuring its minimum set thickness, shorten the treatment time, reduce the number of passes of the blank in the process of ultrasonic forging, exclude the step of finishing after ultrasonic forging in producing a high-quality cutting edge, and, thus, improve the quality of the finished product and the manufacturability of different products, lower labor-intensity as well as to ensure the conditions for automation of the process while reducing the number of passes necessary for forming the cutting edge.

Moreover, an additional technical result, which may be achieved when using the claimed blank, is to ensure such form of making that enables to implement the claimed method without changing the main standard modes of ultrasonic treatment and without using special tools and extra equipment.

In order to achieve the set objective the method of claim 1 is provided.

Additional embodiments of the said method as defined in the dependent claims are possible, wherein it is expedient that:
- when forming the plate its end is made rounded by rolling or grinding or pressing the plate edges in a die;
- when forming the plate chamfers are made between the rounded end and the oppositely located broad surfaces of the plate.

In addition to the above additional embodiment it is possible that the said chamfers are made by ultrasonic forging of the rounded end of the plate with simultaneous one-pass movement of the plate relative to the hammer axes in the transverse direction.

In this connection it is possible to select the angle between the generating lines, as facing each other, of the hammer conical surfaces for the second pass so as to be greater than the angle between the bevel surfaces of the plate chamfers made in the above said one pass.

In this connection it is expedient to select the angle between the generating lines, as facing each other, of the conical surfaces of the hammers for the second pass in the range from 15° to 30° and the angle between the generating lines, as facing each other, of the conical surfaces of the hammers for the first pass in the range from 10° to 14°.

The stated advantages as well as the specific features of this invention are explained by the description of the preferred embodiments with reference to the appended drawings.

### Brief Description of the Drawings

FIG. 1 is a schematic sketch of the device for implementing the claimed method, wherein the arrows indicate the direction of ultrasonic oscillation impact.
FIG. 2 is the A-A section from the FIG. 1, wherein the arrow indicates the direction of the blank movement.
FIG. 3 schematically shows the areas of the deformation points between the conical surfaces of the hammers for a rectangular plate and a plate with a rounded end.
FIG. 4 is a scheme of changing the cross-section of a blank, which is made as a rectangular plate, in ultrasonic forging: a) prior to deforming; b) at subsequent deforming; c) in the middle of the deformation process; d) at the time of moving the finished product from the conical surfaces of the hammers.
FIG. 5 is a scheme of changing the cross-section of a blank, which is made as a plate with a rounded end: a) prior to deforming; b) at subsequent deforming; c) in the middle of the deformation process; d) at the time of moving the finished product from the conical surfaces of the hammers.
FIG. 6 is a scheme of changing the cross-section of a blank, which is made as a plate with a rounded end and chamfers: a) prior to deforming; b) at subsequent deforming; c) in the middle of the deformation process; d) at the time of moving the finished product from the conical surfaces of the hammers.

### Detailed Description of the Preferred Embodiment

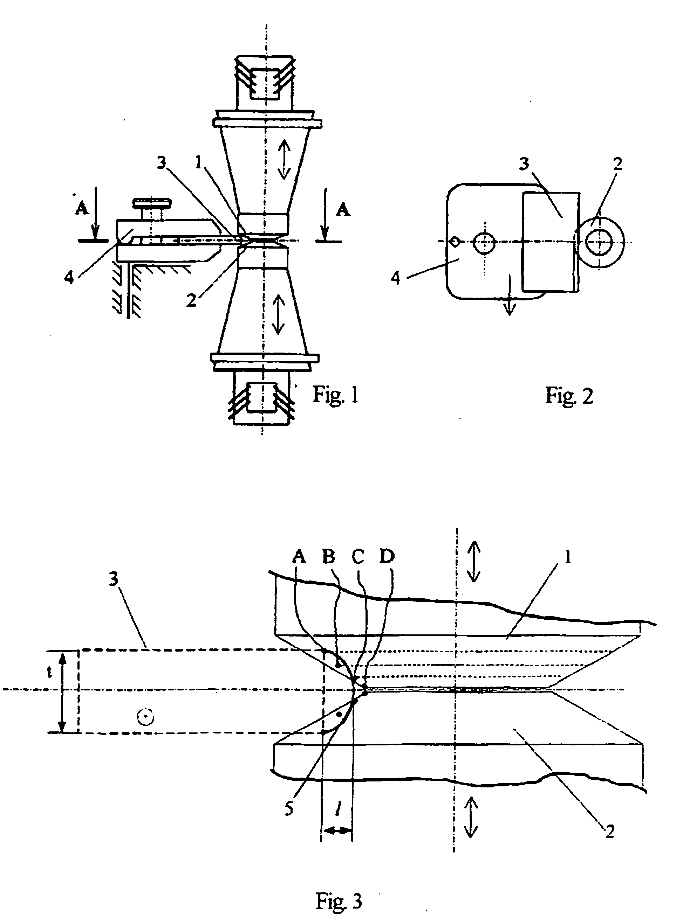

The device for implementing the claimed method (FIG. 1, 2) comprises the hammers 1 and 2, the working surfaces of which are made bevel and form between them an angle corresponding to the angle of the bevel surface, which is formed on the plate 3. The hammers 1 and 2 arc connected, respectively, via the waveguides, with the sources of exciting ultrasonic oscillations. The holder 4 with the mechanism for moving the plate 3 ensures its movement in the transverse direction relative to the longitudinal axes of the hammers 1 and 2 for the purpose of making rectilinear cutting edges along the straight line. For the purpose of making curvilinear surfaces of cutting edges, e.g., for scalpels, the plate 3 is moved along circumferences of a required radius or along a curvilinear trajectory corresponding to a set curvilinear surface ( FIG. 2 shows a simple rectilinear movement of the plate 3).

The process of deforming the plate 3 is explained with the use of FIG. 3, where the plate 3, made rectangular, is schematically shown with a dotted line, and the end of the plate 3 with a rounded end 5 is shown with a bold full line.

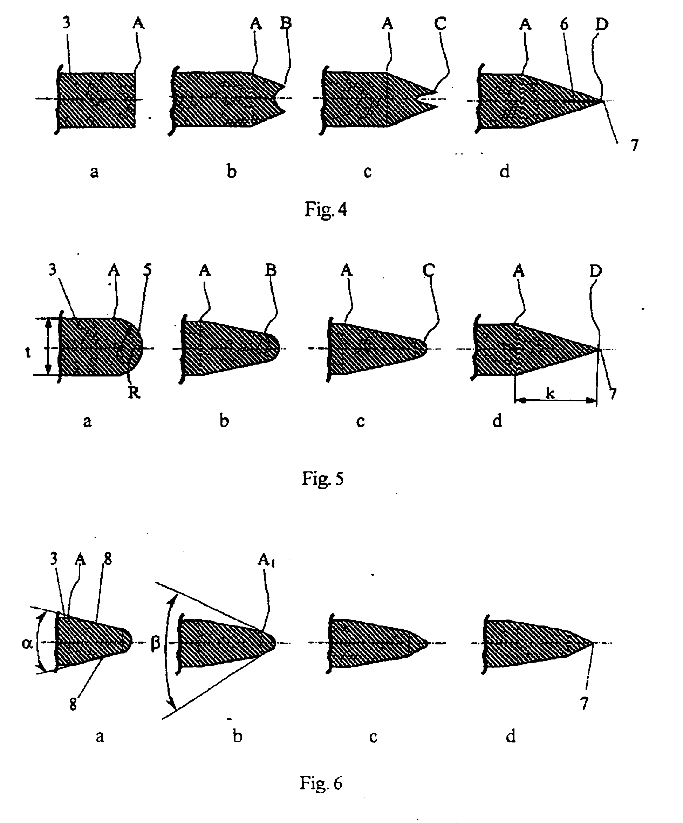

The deformation of the plate 3, both made rectangular and with a rounded end, begins in the area A of the deformation point, which is determined by the thickness t of the plate 3. With the movement of the plate 3 in the transverse direction relative to the longitudinal axis of the hammers 1 and 2 the flow of metal toward the longitudinal axis of the hammers 1 and 2 occurs, and in some area B (FIG. 3) the plate 3, which is made rectangular, takes the form in cross-section, as shown in FIG. 4b, which is connected with accelerated flow of the outer layers of the metal of the plate 3 toward the longitudinal axis of the hammers 1 and 2 as well as with a slower flow of the inner layers of the metal with their approaching to the axis of symmetry of the plate 3. The process of ultrasonic forging in some area C of the deformation point being continued (FIG. 3), the cross-section of the plate 3, which is made rectangular, will correspond to the profile shown in FIG. 4c, and when the plate 3 moves out of the areas of the deformation points at the hammers 1 and 2 and out of the area D, where the tip of the cutting edge is formed, the outer layers close, and a finished product with the slit-like microvoid 6 (FIG. 4d) is created. The process of ultrasonic forging is carried out continuously, and the arcas A, B, C are taken arbitrarily for the purpose of explaining the essence of the claimed method.

The formation of the slit-like microvoid 6 does not depend on the number of passes of the plate 3 relative to the hammers 1 and 2. At a lesser number of passes of the plate 3, which is made rectangular, the longitudinal dimension of the slit-like microvoid 6 will be bigger, and at a bigger number of passes of the plate 3 between the hammers 1 and 2 the longitudinal dimension of the slit-like microvoid 6 will be lesser, that is associated with different rates of the metal flows at a greater power of the applied ultrasonic oscillations or at their lesser power. The thickness of the formed slit-like void 6 does not practically depend on the number of passes and the movement speed of the plate 3. Therefore, the profile of the plate 3, which is made rectangular, does not enable to eliminate the inner defect that reduces the advantages of the process of ultrasonic forging in obtaining micron values of the thicknesses of the cutting edge 7 (FIG. 4d).

The deformation of the plate 3 made with the rounded end 5 (with the convex outer surface of the end 5) also occurs in the area A of the deformation point (FIG. 3), but being at the distance *l* from its end. With the movement of the plate 3 in the transverse direction relative to the longitudinal axis of the hammers 1 and 2 the flow of metal toward the longitudinal axis of the hammers 1 and 2 also occurs, and in some area B (FIG. 3) the plate 3 with the rounded end takes the form in cross-section, as shown in FIG. 5b. The process of ultrasonic forging in some area C of the deformation point being continued (FIG. 3), the cross-section of the plate 3 with the rounded end will correspond to the profile shown in FIG. 5c, and when the plate 3 moves out of the areas of the deformation points at the hammers 1 and 2 and out of the area D, where the tip of the cutting edge is formed, the outer layers close, and a finished product without the slit-like microvoid 6 (FIG. 5d) is created. When utilizing the plate 3 with the rounded end 5, the slit-like microvoid 6 is not formed irrespectively of the number of passes of the plate 3 relative to the hammers 1 and 2. Therefore, the plate 3, when made with the rounded end 5, enables to eliminate, in ultrasonic forging, the inner defect typical for the plate 3 with the rectangular ends and to reduce the number of passes necessary for obtaining micron values of the thickness of the cutting edge 7. Thus, it helps increase the speed of forming the tapered blade of a cutting tool both on account of increasing the power of ultrasonic oscillations and on account of reducing the number of passes.

For the purpose of making a tapered blade out of the plate 3, which is made rectangular, the typical number of passes is 3 - 10. As the studies show, the number of passes for the plate 3, which is made with the rounded end 5, is 1 - 2. And, depending on the requirements to the finished product, the thicknesses of cutting edges from 1 micron to 7 microns may be obtained.

The end 5 (FIG. 5a) may be rounded by rolling or grinding or pressing the plate edges in a die, or by any other known methods. In such cases, in contrast to the method of making tapered blades by grinding, the metal is not annealed, and the finished product is hardened after forming a tapered blade by ultrasonic forging.

As the studies show, the end 5 of the plate 3 may be rounded in a wide range with the roundness radius R from 0.3 t to 0.7 t, where t is the thickness of the plate 3. For the plate 3 with the parallel broad surfaces the radius R is selected in the range from 0.5 to 0.7 t. For the selection of R in the range from 0.3 t to 0.5 t the chamfers 8 (FIG. 6a) may be made on the plate 3. The chamfers 8 may be made simultaneously with the formation of the rounded end 5 by setting in a die or rolling or grinding, or by another known method The selection of a particular value of the roundness radius R as well as the inclination angle a of the chamfers depend on the material used for making the plate 3. Thus, for the more flowable materials impacted by ultrasonic forging lesser values of the roundness radius R are used, and for refractory metals greater values of the roundness radius R are used. The process of forming the cutting edge 7 in making chamfers 8 (FIG. 6a) for R-values from 0.3 to 0.5 t and impacting the area A (FIG. 3) of the deformation point (transition of the chamfers 8 to the parallel broad surfaces of the plate 3) for materials having layers which are easily flowable when impacted by ultrasonic forging goes according to the previous scheme (FIG. 5) with due regard to the fact that the upper, easily flowable layers are inclined toward the direction of their transfer. Thus, a cutting edge without any inner defect may be made. The angle a of the chamfers 8 of the plate 3 (FIG. 6a), when the area A (FIG. 3, 6a) is under impact, is selected in the range from 10° to 80°, and this angle depends on a set width k of the tapered blade (FIG. 5d), which is to be obtained after deforming of the plate 3.

The chamfers 8 may be made by ultrasonic forging of the rounded end 5 of the plate 3 simultaneously with one-pass movement of the plate 3 relative to the axes of the hammers 1, 2 in the transverse direction. It is illustrated in FIG. 5b, 5c. In such a case the plate 3 with the rounded end 5 (FIG. 5a) is deformed by ultrasonic forging in one pass to the condition shown in FIG. 5b and then the plate 3 of the obtained form is used as a blank (FIG. 6a) with chamfers 8, e.g., for repeated deformation with the origin of the deformation point in the area A (FIG. 3, 6a).

But, for the purpose of increasing the speed of ultrasonic forging, it is expedient that the angle β between the generating lines, which are facing each other, of the conical surfaces of the hammers l, 2 in the second pass of the plate 3 is selected so as to be greater than the angle a between the bevel surfaces of the chamfers 8 of the plate 3, which are made in the first pass (FIG. 6a, 6b). In such a case the initial point of deformation A₁ in the second pass (FIG. 6b) shifts to the place where the rounded surface transfers to the chamfers 8, i.e., closer to the tip of the cutting edge 7. Since the total area of the surface treated by ultrasonic forging in this case is reduced, the speed of movement of the plate 3 between the hammers 1, 2 may be increased, which raises the output of the whole process. In the result a tapered blade without any inner defect is obtained, since the end 5 (FIG. 6) remains rounded when the process is conducted in the area A₁ of the initial point of deformation.

The angle β between the generating lines, which are facing each other, of the conical surfaces of the hammers 1, 2 in the second pass is selected in the range from 15° to 30°, and the angle α between the generating lines, which are facing each other, of the conical surfaces of the hammers 1, 2 in the first pass is selected in the range from 10° to 14°.

The similar process may be conducted for a blank also, wherein the chamfers 8 are made by setting in a die or rolling or grinding simultaneously with rounding the end between the broad surfaces of the plate 3. In this case ultrasonic forging is conducted only in one pass of the plate 3 between the hammers 1, 2, with the area A₁ of the initial point of deformation shifted to the point where the chamfers 8 are conjugated with the rounding. The angle α of the chamfers 8 of the plate 3 (FIG. 6a) is selected in the range from 10° to 14° when impacting the area A₁.

Thus, in any embodiments of the claimed method the end 5 of the plate 3 intended for deforming it with the conical hammers 1, 2 is made rounded.

### Examples of implementing the method

### Example 1

The blank is the plate 3 made of 65 X 13 steel. The thickness t of the blank is 0.1 mm. The roundness radius R is 0.05 mm. Ultrasonic oscillations with amplitude of 10 microns and frequency 18.3 kHz are imparted to the hammers 1, 2 by magnetostrictors PMS 16A-18. The process is conducted according to the scheme shown in FIG. 5. The angle between the conical surfaces of the hammers 1, 2 is 30°. After one pass a tapered blade is obtained without an inner defect and having the cutting edge thickness of 3 to 4 microns.

### Example 2

The blank is the plate 3 made of 65 X13 steel. The thickness t of the blank is 0.1 mm. The roundness radius R is 0.07 mm. The modes of ultrasonic oscillations are as in Example 1. The process is conducted according to the scheme shown in FIG. 5. The angle between the conical surfaces of the hammers 1, 2 is 30°. After one pass a tapered blade is obtained without an inner defect and having the cutting edge thickness of 5 to 7 microns.

### Example 3

The blank is the plate 3 made of 65 X13 steel. The thickness t of the blank is 0.1 mm. The roundness radius R is 0.04 mm. The angle u of the chamfer is 10°. The modes of ultrasonic oscillations are as in Example 1. The angle between the conical surfaces of the hammers 1, 2 is 30°. The process is conducted according to the scheme shown in FIG. 5 (with a blank - FIG. 6a) with the area A of the point of deformation beginning in the point where the chamfers 8 transfer to the parallel broad surfaces of the plate 3. After one pass a tapered blade is obtained without an inner defect and having the cutting edge thickness of 1.2 to 2.5 microns.

### Example 4

The blank is the plate 3 made of 65 X 13 steel. The thickness t of the blank is 0.4 mm. The roundness radius R is 0.2 mm. The modes of ultrasonic oscillations are as in Example 1. The process is conducted according to the scheme shown in FIG. 5. The angle between the conical surfaces of the hammers 1, 2 is 30°. After one pass a tapered blade is obtained without an inner defect and having the cutting edge thickness of 6 to 7 microns. After ultrasonic forging in two passes the thickness of the cutting edge is 2 to 3 microns.

### Example 5

The blank is the plate 3 made of 65 X13 steel. The thickness t of the blank is 0.4 mm. The roundness radius R is 0.28 mm. The modes of ultrasonic oscillations are as in Example 1. The process is conducted according to the scheme shown in FIG. 5. The angle between the conical surfaces of the hammers 1, 2 is 30°. After one pass a tapered blade is obtained without an inner defect and having the cutting edge thickness of 8 to 9 microns. After ultrasonic forging in two passes the thickness of the cutting edge is 2.5 to 3.5 microns.

### Example 6

The blank is the plate 3 made of 65 X13 steel. The thickness t of the blank is 0.4 mm. The roundness radius R is 0.12 mm. The angle α of the chamfer is 75°. The modes of ultrasonic oscillations are as in Example 1. The angle between the conical surfaces of the hammers 1,2 is 30°. The ultrasonic forging process is conducted according to the scheme shown in FIG. 5 with the area A of the point of deformation beginning in the point where the chamfers 8 transfer to the parallel broad surfaces of the plate 3 (FIG. 6a). After one pass a tapered blade is obtained without an inner defect and having the cutting edge thickness of 4 to 5 microns. After ultrasonic forging in two passes the thickness of the cutting edge is 1.5 to 2.5 microns.

### Example 7

The blank is the plate 3 made of 65 X13 steel. The rounding and the chamfers 8 are formed by preliminary reducing the plate 3 in its thickness. The thickness t of the blank is 0.4 mm. The roundness radius R is 0.12 mm. The angle α of the chamfer is 14°. The modes of ultrasonic oscillations are as in Example 1. The angle between the conical surfaces of the hammers 1, 2 is 25°. The ultrasonic forging process is conducted according to the scheme shown in FIG. 6 with the area A₁ of the point of deformation beginning in the point where the chamfers 8 transfer to the rounding. After one pass a tapered blade is obtained without an inner defect and having the cutting edge thickness of 1.2 to 2.0 microns.

### Example 8

The blank is the plate 3 made of 65 X13 steel. The rounding and the chamfers 8 are formed by preliminary reducing the plate 3 in its thickness. The thickness t of the blank is 0.4 mm. The roundness radius R is 0.16 mm. The angle α of the chamfer is 10°. The modes of ultrasonic oscillations are as in Example 1. The angle between the conical surfaces of the hammers 1, 2 is 30°. The ultrasonic forging process is conducted according to the scheme shown in FIG. 6 with the area A₁ of the point of deformation beginning in the point where the chamfers 8 transfer to the rounding. After one pass a tapered blade is obtained without an inner defect and having the cutting edge thickness of 1.2 to 2.0 microns.

### Example 9

The blank is the plate 3 made of 65 X13 steel. The rounding and the chamfers 8 are formed by preliminary reducing the plate 3 in its thickness. The thickness t of the blank is 0.4 mm. The roundness radius R is 0.15 mm. The angle α of the chamfer is 12°. The modes of ultrasonic oscillations are as in Example 1. The angle between the conical surfaces of the hammers 1, 2 is 18°. The ultrasonic forging process is conducted according to the scheme shown in FIG. 6 with the area A₁ of the point of deformation beginning in the point where the chamfers 8 transfer to the rounding. After one pass a tapered blade is obtained without an inner defect and having the cutting edge thickness of 1.6 to 2.4 microns.

### Example 10

The blank is the plate 3 made of 65 X13 steel. The rounding and the chamfers 8 are formed by preliminary reducing the plate 3 in its thickness. The thickness t of the blank is 0.4 mm. The roundness radius R is 0.15 mm. The angle α of the chamfer is 10°. The modes of ultrasonic oscillations are as in Example 1. The angle between the conical surfaces of the hammers 1, 2 is 25°. The ultrasonic forging process is conducted according to the scheme shown in FIG. 6 with the area A₁ of the point of deformation beginning in the point where the chamfers 8 transfer to the rounding. After one pass a tapered blade is obtained without an inner defect and having the cutting edge thickness of 1.0 to 1.5 microns.

### Example 11

The blank is the plate 3 made of 65 X13 steel. The thickness t of the blank is 0.4 mm. The rounding with the roundness radius 0.2 mm is made by preliminary reducing the plate 3 in its thickness and the chamfers 8 arc formed in one pass by ultrasonic forging of the said plate 3 with the angle 12° between the generating lines of the conical surfaces of the hammers 1, 2. In the result of ultrasonic forging the roundness radius R is 0.12 mm (FIG. 5c). The angle α of the chamfer is 12°. The modes of ultrasonic oscillations are as in Example 1. The ultrasonic forging process is conducted according to the scheme shown in FIG. 6 with the area A₁ of the point of deformation beginning in the point where the chamfers 8 transfer to the rounding. After one pass a tapered blade is obtained without an inner defect and having the cutting edge thickness of 1.0 to 1.4 microns.

It is expedient to utilize finished products, as obtained after subsequent hardening of the plate 3 treated by ultrasonic forging according to Examples 1 - 3, for making various domestic tools, e.g., razors. It is practical to utilize products according to Examples 4 - 11 for making medical tools, e.g., surgical scalpels, ophthalmologic scissors, endoscopic cutting tools, etc.

Thus, as a blade in this invention any cutting tool is understood. It may be any cutting tool of everyday use, e.g., domestic knives and razors, cutting tools used in trades or medicine, e.g., scalpels or technical knives for manual or machine application.

The cutting edge 7 is the edge of a blade, which is used for cutting any object.

A sharp cutting edge is the cutting edge 7, thickness of which directly on the edge is up to 20 microns, better up to 10 microns, the optimal thickness is up to 3 microns.

The cut surface in the second claimed embodiment of the method of making a blade is defined as the area that appears when a blank plate 3 is cut. The cut surface is mainly located at right angle to the main broad surfaces of the plate 3.

The device for ultrasonic forging is a machine tool, which has a forging die moving in the horizontal or vertical direction. A machine tool may have one forging die, which is installed opposite to the stationary bearing surface. In such cases the forging die moves, principally, transversely to the bearing surface located under one hammer 1. Two forging dies may be installed opposite to each other with two hammers 1 and 2. In such a case the forging dies work in antiphase relative to each other. Nevertheless, phases may be shifted by 90° and even more relative to the antiphase.

A slit is provided between forging dies, as well as between a forging die and the bearing surface, which width ensures such a position at which the forging dies, as well as the forging die and the bearing surface, do not contact at any phase of the oscillatory cycle. This slit abuts on the slit of wedge-shaped cross-section, where a blade takes its form, being impacted by the hammer 1 of the forging die or by the hammers 1, 2 of the forging dies. In the case with forging dies/bearing surfaces, which have round section in the directions orthogonal to the direction of oscillation, the blade blank with its cut surface is drawn with the use of the optimal attachment device for fastening the blank. The drawing is carried out at a definite, as a rule constant, distance from the center axis of the forging die. (It is also possible to draw the very device for ultrasonic forging along the fastened cut surface. Furthermore, the counter-drawing of the cut surface and the device for ultrasonic forging is also possible.) In such cases the depth of immersion of the blank cut surface into the forging slit is a set value and is selected so as the produced blade has a set width. The depth of immersion may be easily determined through a few experiments. Multiple drawing of the cut surface through the forging die is also possible, but in such a case it will be necessary to increase the immersion depth with each drawing (proceeding from the unformed cut surface). The immersion depth may be also varied in the process of drawing. In such a case transitions between a sharp-edge section and blunt-edge section of the blade will appear.

The depth of immersion or setting is controlled by various techniques. In the simplest case the blade blank or the holder is directed against the dies by mechanical guides. They are installed in parallel (along a straight line, along a curved line, or in combination thereof) to the cut surface in the direction of the main surfaces or the blade blank. At the same time it is possible to control the immersion depth with electromechanical, electromotor or piezoelectric actuators acting on the holder of the hammers 1 and 2 with due regard to the position of the blank passed. Moreover, it is possible to change the angle of the forging gap between the hammers 1, 2 and control it. For this, one forging die may turn around the rocking axis going through the imaginary top point of the wedge-shaped gap at right angle to section. In the process of making it is possible to set a different angle of the gap for each pass of the die, e.g., the first angle of the gap may be 0.1 - 0.9 times less, and preferably 0.35 - 0.75 times less, than the angle for the second pass - in the optimal case that will be the last pass. For the second pass the angle from 10° to 50°, preferably from 15° to 30°, is used. Moreover, a side of the wedge-shaped forging gap may go straight along its section. The sides may also have concave or convex section. Both sides of the forging die may be different in the above-stated variants. According to the proposed technology the number of passes is in the range from 1 to 10, more preferably from 1 to 5, and most preferably from 1 to 2.

The invention covers a blade blank, which cut surface, as subject to treatment, has a rounded-off form.

For cutting a blank traditional mechanical or electro-mechanical methods of cutting and equipment may be used, e.g., drum-type shears or spark erosion. The notion "cutting" in this invention according to its second claimed method also covers die forming. A finished cut surface is usually rectilinear. The simplest cutting is the creation of the cut surface at right angle to the main area of a large plate, at which case two edges appear, each at the angle of 90°. Then the edges of the cut surface are rounded-off.

A rounded-off section implies various particular forms, e.g., those of a circular segment, oval, hyperbola or ellipse. Included here are polygonal sections, where the surface between the angles may lie in straight lines or as stated above. It is most expedient when the angle of transition between the area of rounded section (and there may be several such angles in the area of the cut surface) and the area that abuts on it, e.g., on the main surface of the blade blank is from 180° to 100° (not less, and better not less than 160°).

### Industrial Applicability

The claimed method of making a cutting tool blade and a blank therefor may be most successfully applied in the industry in making different tools with high durability and with cutting edges of small thickness,

## Claims

1. A method of making a cutting tool blade, comprising forming of a plate (3), deforming by ultrasonic forging a plate (3) end (5) located between the conical surfaces of the hammers (1, 2) while simultaneously moving the plate (3) relative to the hammer axes in the transverse direction for forming a tapered blade on the plate (3), **characterized in that** the said end (5) of the plate (3) being rounded when forming the plate (3), wherein the roundness radius (R) is in the range from 0.3 t to 0.7 t, wherein t is the plate thickness.

2. A method according to claim 1, **characterized in that** when forming a plate (3) its end (5) is rounded by rolling or grinding or pressing the plate edges in a die.

3. A method according to claim 1, **characterized in that** when forming a plate (3) chamfers are made between the rounded end (5) and the oppositely located broad surfaces of the plate.

4. A method according to claim 3, **characterized in that** the said chamfers are made by ultrasonic forging of the rounded end (5) of the plate (3) with simultaneous one-pass movement of the plate relative to the hammer axes in the transverse direction.

5. A method according to claim 4, **characterized in that** the angle between the generating lines, as facing each other, of the hammer conical surfaces is selected for the second pass so as to be greater than the angle between the bevel surfaces of the plate chamfers made in the above said one pass.

6. A method according to claim 5, **characterized in that** the angle between the generating lines of the conical surfaces of the hammers (1, 2) for the second pass is selected in the range from 15° to 30° and the angle between the generating lines, as facing each other, of the hammer conical surfaces is selected in the range from 10° to 14°.

## Patentansprüche

1. Verfahren zur Herstellung einer Klinge eines Schneidwerkzeugs, welches die Formgebung einer Platte (3), die Umformung eines zwischen den konischen Oberflächen von Sätteln (1, 2) liegenden Endes (5) einer Platte (3) durch Ultraschallschmieden bei gleichzeitiger Bewegung der Platte (3) quer zu den Achsen der Sättel zur Gestaltung einer zugespitzten Schneide an der Platte (3) umfasst, **dadurch gekennzeichnet, dass** das Ende (5) der Platte (3) bei der Formgebung der Platte (3) abgerundet wird, wobei der Abrundungsradius (R) im Bereich von 0,3 t bis 0,7 t liegt, wobei t die Stärke der Platte ist.

2. Verfahren nach Anspruch 1, **dadurch gekennzeichnet, dass** bei der Formgebung einer Platte (3) deren Ende (5) durch Walzen oder Schleifen oder Stauchen der Plattenkanten im Werkzeug abgerundet wird.

3. Verfahren nach Anspruch 1, **dadurch gekennzeichnet, dass** bei der Formgebung einer Platte (3) Schrägen zwischen dem abgerundeten Ende (5) und den gegenüber angeordneten breiten Oberflächen der Platte hergestellt werden.

4. Verfahren nach Anspruch 3, **dadurch gekennzeichnet, dass** die Schrägen durch Ultraschallschmieden des abgerundeten Endes (5) der Platte (3) bei gleichzeitiger Bewegung der Platte quer zu den Achsen der Sättel in einem Durchgang hergestellt werden.

5. Verfahren nach Anspruch 4, **dadurch gekennzeichnet, dass** der Winkel zwischen den zueinander gewendeten konische Oberflächen der Sättel Bildenden im zweiten Durchgang größer als der Winkel zwischen den im ersten Durchgang erzeugten abgeschrägten Oberflächen der Platte (3) gewählt wird.

6. Verfahren nach Anspruch 5, **dadurch gekennzeichnet, dass** der Winkel zwischen den zueinander gewendeten konische Oberflächen der Sättel (1, 2) Bildenden im zweiten Durchgang im Bereich von 15° bis 30° und der Winkel zwischen den zueinander gewendeten konische Oberflächen der Sättel Bildenden im Bereich von 10° bis 14° gewählt wird.

## Revendications

1. Procédé de fabrication d'une lame d'un outil de coupe, comprenant : former une plaque (3), déformer par forgeage à ultrasons une extrémité (5) de la plaque (3) située entre les surfaces coniques des marteaux (1, 2) en déplaçant simultanément la plaque (3) par rapport aux axes des marteaux suivant la direction transversale pour former une lame conique à la plaque (3), **caractérisé en ce que** cette extrémité (5) de la plaque (3) est arrondie en formant la plaque (3), le rayon (R) de la courbure étant compris dans la gamme entre 0,3 t et 0,7 t, t étant l'épaisseur de la plaque.

2. Procédé selon la revendication 1, **caractérisé en ce que** lors de la constitution d'une plaque (3) son extrémité (5) est arrondie par roulage ou fraisage ou pressage des bords de la plaque dans un moule.

3. Procédé selon la revendication 1, **caractérisé en ce que** lors de la constitution d'une plaque (3) des chanfreins sont réalisés entre l'extrémité (5) arrondie et les grandes surfaces de la plaque situées en vis-à-vis.

4. Procédé selon la revendication 3, **caractérisé en ce que** ces chanfreins sont réalisés par forgeage à ultrasons de l'extrémité (5) arrondie de la plaque (3) avec un mouvement simultané à un seul passage de la plaque par rapport aux axes des marteaux suivant la direction transversale.

5. Procédé selon la revendication 4, **caractérisé en ce que** l'angle entre les lignes génératrices, en vis-à-vis, des surfaces coniques des marteaux est choisi pour le deuxième passage de sorte qu'il soit supérieur à l'angle entre les surfaces chanfreinées des chanfreins de la plaque (3) réalisés audit seul passage.

6. Procédé selon la revendication 5, **caractérisé en ce que** l'angle entre les lignes génératrices des surfaces coniques des marteaux (1, 2) pour le deuxième passage est compris dans la gamme entre 15° et 30° et l'angle entre les lignes génératrices, en vis-à-vis, des surfaces coniques des marteaux est compris dans la gamme entre 10° et 14°.
